Europäisches Patentamt

European Patent Office

Office européen des brevets

(11) Publication number: **0 053 617**
**B1**

## (12) EUROPEAN PATENT SPECIFICATION

(45) Date of publication of patent specification: **02.01.85**

(51) Int. Cl.⁴: **A 62 C 37/28, F 16 L 41/06**

(21) Application number: **81901483.8**

(22) Date of filing: **01.06.81**

(86) International application number:
**PCT/SE81/00157**

(87) International publication number:
**WO 81/03620 24.12.81 Gazette 81/30**

(54) **PIPING SYSTEM WITH VARIABLE CONFIGURATION.**

(30) Priority: **18.06.80 SE 8004509**

(43) Date of publication of application:
**16.06.82 Bulletin 82/24**

(45) Publication of the grant of the patent:
**02.01.85 Bulletin 85/01**

(84) Designated Contracting States:
**DE FR GB**

(56) References cited:
**CH-A- 565 567**
**CH-A- 572 752**
**DE-A-2 821 098**
**US-A-3 983 897**

(73) Proprietor: **FLAMCO B.V.**
**Industriestraat 6**
**NL-2802 AC Gouda (NL)**

(72) Inventor: **JORUP, Lars Johan Peder**
**Persiljestigen 18**
**S-611 45 Nyköping (SE)**
Inventor: **TOOMINGAS, Illar**
**Selebovägen 17**
**S-122 48 Enskede (SE)**

(74) Representative: **Jacobsson, Rune et al**
**JACOBSSON & BILLBERG PATENTBYRA AB S:T**
**Eriksgatan 77**
**S-113 32 Stockholm (SE)**

Courier Press, Leamington Spa, England.

## Description

Technical Field

The invention relates to a piping system with variable configuration for spreading a fluid, suitably in extinguishing systems, emergency cooling systems and the like.

Background Art

In piping systems (e.g. CH—C—572 752) which branch out to form different configurations, the connections between the different pipe sections and between the means fed thereby, such as nozzles, must be made when the piping system is installed. Quite often, the placing partition walls is scarcely decided when a piping system, e.g. for a sprinkler installation, is installed. Consequently, when premises are redisposed the piping system must be dismantled and rebuilt at high cost.

Disclosure of Invention

The object of the invention is to provide a piping system where the connections between the different pipe sections as well as between the pipes and the means fed via the pipes are not made before the need of such connections arises. Alteration of the piping system configuration without large costs and material loss is thus enabled for a desired redisposition or conversion of the premises. The invention is based on the utilization of removable branching means which first open the pipe walls when the need arises, so that both pipes and branching means can be used for fitting into new configurations. In this way great flexibility and low costs are achieved, while at the same time there is greater operational reliability due to less risk of leakage.

Brief Description of Drawing

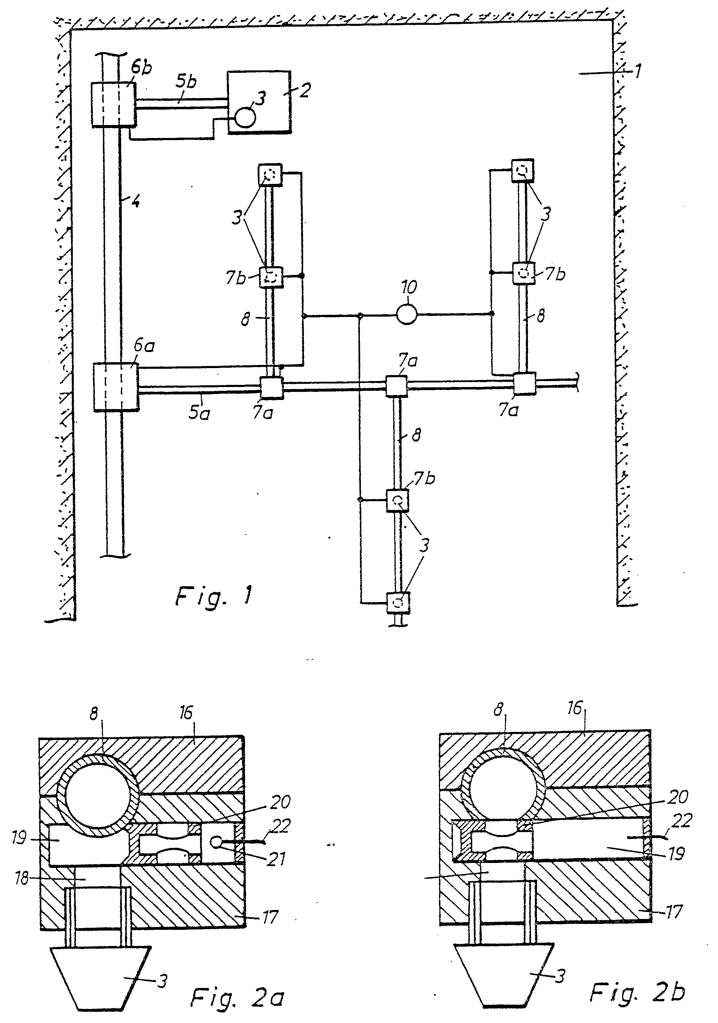

The invention will now be described in detail below with the aid of an embodiment example, while referring to the appended drawing, where Figure 1 schematically illustrates a piping system in accordance with the invention for a fire extinguishing installation, and Figures 2a and 2b schematically illustrate a branching means suited to connecting a pipe to another pipe or to a fluid spreading means.

Preferred Embodiment ·

Figure 1 illustrates a part of a piping system intended for distributing fire extinguishing fluid, e.g. water to the sprinkler heads 3, in a building 1. A main distribution pipe is denoted by the numeral 4, and secondary pipes 5a, 5b are connectable to it via pipe couplings 6a, 6b. The dimensions of pipe couplings 6a, 6b are suited to the respective diameters of the main distribution pipe and the secondary pipe. These couplings are of a type known per se, where an opening in a pipe on which the coupling is fixed is provided by a cutting means displaced by a force. Couplings of this kind are described in the Swedish Patent Specification 377 371 or the U.S. Patent Specification 3 394 727, for example. Pipe couplings denoted by 7a, 7b are of the same type as couplings 6a, 6b and so dimensioned that they can connect the secondary pipes 5a to the branch pipe 8 as well as connecting the sprinkler heads 3 to the branch pipe 8. A closed space 2, in which easily igniteable material is stored, obtains extinguishing medium directly from the main distribution pipe 4 via a secondary pipe 5b so that the extinguishing medium is fed to the space via a spreader nozzle or sprinkler, not shown in detail. There are state indicating means 9, 10 which are actuated by an abnormal state, e.g. the exceeding of a given temperature limit, smoke generation, explosion or ionising etc. According to the example, the alarm means 9 is actuated by ionizing, while the means 10 is actuated by exceeding a given temperature limit. The sprinkler heads can naturally be triggered manually also.

Figures 2a and 2b illustrate the function of the pipe coupling known per se. The latter includes an upper part 16 and a lower part 17, each provided with a semi-cylindrical recess, and when these parts are assembled they sealingly enclose the pipe, e.g. pipe 8. The part 17 is provided with a channel 18 extending at right angles to the pipe 8, A branch pipe or a fluid spreader means, e.g. a sprinkler head 3, is connected to the channel 18, which is not in communication with the bore of the pipe on being fitted, since the pipe wall is not pierced (Figure 2a). The pipe coupling includes a cutting means 20, displaceable in a transverse channel 19. An explosive charge 21 is arranged in the transverse channel and can be caused to explode with the aid of an activating signal obtained on the wire 22. The cutting means 20 is displaced as a result of the explosion, and communication is opened between the pipe 8 and the sprinkler head 3, the latter only being schematically illustrated (Figure 2b).

If a fire occurs in the building 1 and the alarm means 10 generates an activating signal, the explosive charges are triggered in the pipe couplings 6a, 7a and 7b, which are connected to the alarm means 10 via the wire indicated by a dashed line. Communication is thus opened in the pipe coupling 6a as well as 7a and 7b, so that the extinguishing fluid, e.g. water, can flow from the main distribution pipe 4 to the secondary pipe 5a and from there to the sprinkler heads 3 via the pipe couplings 7a and 7b. The extinguishing operation can start immediately in this mode. If the fire extinguishing installation is not put to use, and redisposition of the premises be of interest, the piping system can be taken apart and the pipes assembled in another configuration.

An indicator reacting for ionization is arranged in the closed space 2. If a fire in this space should therefore cause ionization, an activating signal is sent on the wire, indicated by a dashed line, to the pipe coupling 6b. Passage is opened from the main distribution pipe 4 to the branch pipe 5b so that the closed room 2 is fed with extinguishing medium.

It will thus be seen that a piping system is provided by the invention, and has a configuration which can be freely changed while using the former parts, which enables large savings and freedom in planning.

## Claim

Piping system with variable configuration for spreading a fluid, for example in extinguishing installations, emergency cooling installations and the like, the piping system being provided with alarm means (9, 10) which sense the state in the space which is to be monitored, and for an abnormal state in said space generate an alarm signal, characterized in that the pipes (4, 5, 8) incorporated in the piping system lack holes for branches and are provided with pipe couplings (6, 7), of a type having piercing means (20) enabling communication to be made between the pipes connected by the pipe coupling, and in that the piercing means are provided with triggering means (21) adapted for activating the piercing means on receiving an alarm signal, so that the piping system functions as an ordinary fluid spreading system, but where the branches can be optionally moved as long as the piping system has not been actuated by an alarm signal.

## Revendication

Système de canalisations à configuration variable pour répandre un fluide, par exemple dans des installations d'extinction, des installations de refroidissement d'urgence et autres, le système de canalisations étant équipé de moyens d'alarme (9, 10) qui détectent l'état de l'espace qui doit être surveillé et qui, dans le cas d'un état anormal dudit espace, produisent un signal d'alarme, caractérisé en ce que les canalisations (4, 5, 8) incorporées dans le système de canalisations ne présentent pas de trous pour des branchements et sont équipées de raccords (6, 7) de canalisation d'un type comportant des moyens (20) de perçage permettant d'établir une communication entre les canalisations reliées par le raccord de canalisations, et en ce que les moyens de perçage sont équipés de moyens (21) de déclenchement conçus pour actionner les moyens de perçage à la réception d'un signal d'alarme, afin que le système de canalisations fonctionne comme un système normal de distribution de fluide, mais dans lequel les branchements peuvent être déplacés facultativement tant que le système de canalisations n'a pas été actionné par un signal d'alarme.

## Patentanspruch

Rohrleitungssystem mit veränderlicher Konfiguration zum Spritzen einer Flüssigkeit, z.B. in Löschbetriebsanlagen, Notkühlbetriebseinrichtungen und ähnlichen, wobei das Rohrleitungssystem mit einer Alarmeinrichtung versehen ist, die den Zustand im zu überwachenden Raum abtastet und die bei einem nicht normalen Zustand in diesem Raum ein Alarmsignal erzeugt, dadurch gekennzeichnet, daß die in dem Rohrleitungssystem verwendeten Rohre (4, 5, 8) keine Löcher für Abzweigungen aufweisen und mit Rohrkupplungen (6, 7) versehen sind, die Schneideinrichtungen (20) zur Schaffung einer Verbindung zwischen den durch die Rohrkupplung verbundenen Rohre besitzen, und daß die Schneideinrichtungen jeweils mit einer Auslöse- oder Triggereinrichtung (21) versehen ist, um die Schneideinrichtungen bei Empfang einer Alarmsignales zu betätigen, so daß das Rohrleitungssystem als normales Flüssigkeitspritzsystem arbeitet, in dem aber die Abzweigungen so lange wahlfrei bewegt werden können, wie das Rohrleitungssystem nicht durch ein Alarmsignal betätigt wird.

0 053 617

*Fig. 1*

*Fig. 2a*

*Fig. 2b*